Europäisches Patentamt

(19) European Patent Office

Office européen des brevets

(11) Publication number: **0 067 532**
**A1**

(12) # EUROPEAN PATENT APPLICATION

(21) Application number: 82302492.2

(22) Date of filing: 17.05.82

(51) Int. Cl.³: **H 02 H 9/08**

(30) Priority: 19.05.81 JP 75174/81

(43) Date of publication of application:
22.12.82 Bulletin 82/51

(84) Designated Contracting States:
CH DE GB LI SE

(71) Applicant: TOKYO SHIBAURA DENKI KABUSHIKI
KAISHA
72, Horikawa-cho Saiwai-ku
Kawasaki-shi Kanagawa-ken 210(JP)

(72) Inventor: Masui, Michio Patent Division
Toshiba Corporation 72, Horikawa-cho
Saiwai-ku Kawasaki-shi Kanagawa-ken(JP)

(72) Inventor: Ogawa, Yasuhiro Patent Division
Toshiba Corporation 72, Horikawa-cho
Saiwai-ku Kawasaki-shi Kanagawa-ken(JP)

(72) Inventor: Esumi, Kunio Patent Division
Toshiba Corporation 72, Horikawa-cho
Saiwai-ku Kawasaki-shi Kanagawa-ken(JP)

(74) Representative: Kirk, Geoffrey Thomas et al,
BATCHELLOR, KIRK & EYLES 2 Pear Tree Court
Farringdon Road
London EC1R 0DS(GB)

(54) Secondary arc extinction device.

(57) In a three phase transmission line, a variable reactance is
provided in parallel with the interphase capacitance so that,
in the event of a phase to earth secondary arc occurring, the
reactance and capacitance are caused to resonate thereby
providing only a high impedance path between the phases
and thus reducing interphase current flow to a low value at
which the secondary arc can be extinguished.

Fig.5.

# SECONDARY ARC EXTINCTION DEVICE

This invention relates to a multiphase transmission line having means for extinguishing a secondary arc between one phase of the line and earth.

In a multiphase transmission line, a flashover can occur between one of the transmission lines and earth, such a flashover being referred to as a secondary arc. Such a flashover is particularly likely to occur in conditions when lightning is liable to occur. Although each of the transmission lines has a circuit breaker at each end, and these breakers are opened to isolate the line in an attempt to extinguish the arc, the arc is continued to be fed from other phases of the line due to the electrostatic coupling which exists between the conductors of the transmission line.

The problem of secondary arc extinction exists with power transmission systems at the voltage rating used at present, but it will become an even greater problem in the future when UHV power transmission systems are employed.

An object of the present invention is to provide an electric power system with a secondary arc extinction device whereby a secondary arc can be rapidly extinguished.

2

According to the present invention, an electric power system includes a multiphase transmission line, means for detecting the presence of a secondary arc between one phase of the line and earth, a transformer having a primary winding and a secondary winding for each phase, one terminal of each primary winding being connected to the respective phase of the line, first reactance means connected between the other terminal of each primary winding and earth, second reactance means connected to each secondary winding of the transformer and means for controlling the second reactance means to thereby extinguish said secondary arc in response to the detecting means indicating the presence of such an arc.

In order that the invention may be more readily understood, it will now be described, by way of example only, with reference to the accompanying drawings, in which:-

Figure 1 is a diagram showing a conventional electric power transmission line with a fixed reactor with zero phase compensation,

Figures 2(a) and 2(b) are diagrams of part of Figure 1 showing how the components of Figure 2(a) can be reconsidered and rearranged as shown in Figure 2(b),

Figure 3 is a diagram showing a fault on the a phase of a conventional electric power transmission line,

3

Figure 4 is a diagram showing a fault on an a phase of a transmission line when each line comprises two juxtaposed conductors,

Figure 5 is a circuit diagram showing one embodiment of the present invention,

Figures 6(a) and 6(b) are diagrams showing the present invention applied to a three phase transmission line and a three phase, two conductor per phase, transmission line, respectively,

Figure 7 is a block diagram of one form of the control device shown in Figure 5, and

Figure 8 is a block diagram of another form of the control device shown in Figure 5.

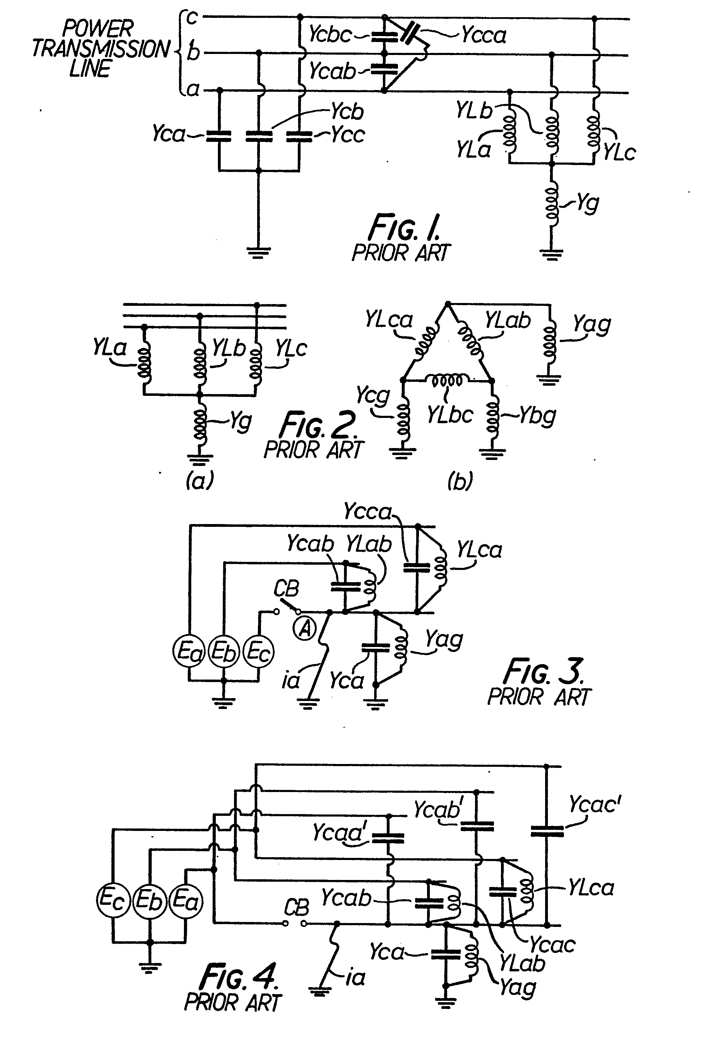

Referring to Figure 1, a three phase transmission line has phase conductors a, b and c. Each conductor forms a capacitor with ground and there is capacitance between each pair of the conductors of the transmission line. A star connected reactor is connected between the phases of the transmission line and the star point is connected by a further reactance to ground. The reactor system is hereinafter referred to as a reactor with zero phase compensation.

4

In Figure 1,

$Y_{ca}$ = power transmission line a phase earth admittance

$Y_{cb}$ =         "                         b phase         "

$Y_{cc}$ =         "                         c phase         "

$Y_{cab}$ =         "                         a – b phase interphase admittance

$Y_{cbc}$ =         "                         b – c phase         "

$Y_{cca}$ =         "                         c – a phase         "

$Y_{La}$ = $1/\omega \cdot La$ : reactor a phase admittance

$Y_{Lb}$ = $1/\omega \cdot Lb$ :   "   b phase   "

$Y_{Lc}$ = $1/\omega \cdot Lc$ :   "   c phase   "

$Y_{g}$ = $1/\omega \cdot Lg$ : neutral point reactor admittance

$L_{a}$ = reactor a phase reactance

$L_{b}$ =   "   b phase   "

$L_{c}$ =   "   c phase   "

$L_{g}$ = neutral point reactor   "

The reactor with zero phase compensation, which is shown in Figure 2(a), is equivalent to the reactance components connected between the phases and between phase and earth, as shown in Figure 2(b). If it is assumed that $\underline{m} = Y_{La} + Y_{Lb} + Y_{Lc} + Y_{g}$, each admittance will be obtained as follows:-

$$Y_{Lab} = Y_{La} \cdot Y_{Lb}/m$$

$$Y_{Lbc} = Y_{Lb} \cdot Y_{Lc}/m$$

$$Y_{lca} = Y_{Lc} \cdot Y_{La}/m$$

$$Y_{ag} = Y_{a} \cdot Y_{g}/m$$

$$Y_{bg} = Y_{b} \cdot Y_{g}/m$$

$$Y_{cg} = Y_{c} \cdot Y_{g}/m$$

5

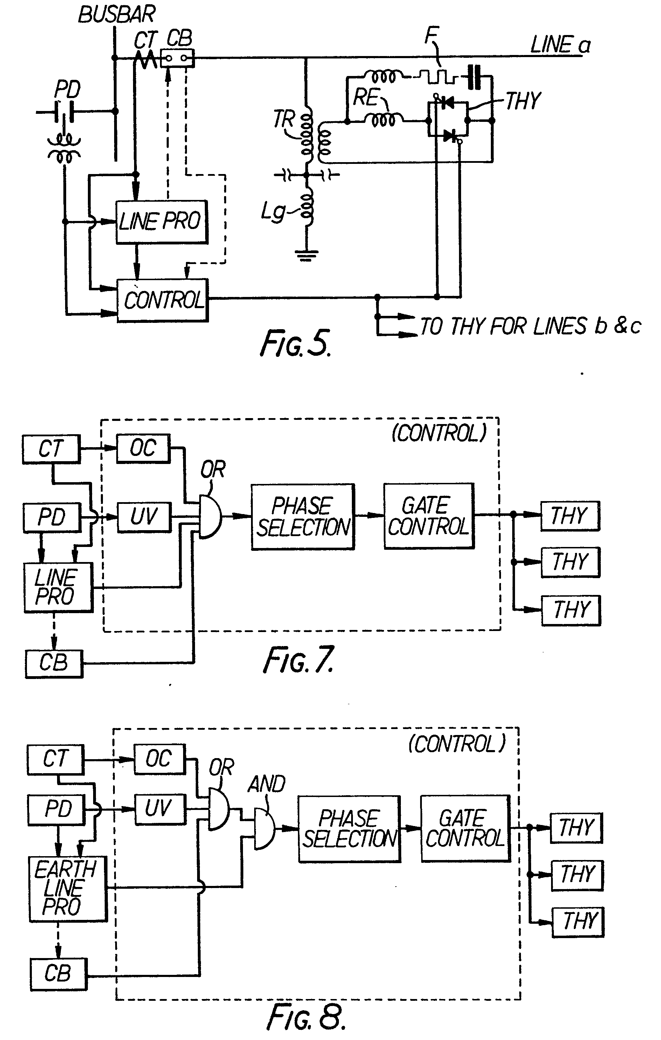

Figure 3 shows diagrammatically the transmission lines with the interphase and phase/earth admittance and with a fault on phase $\underline{a}$ to earth feeding an arc current $\underline{ia}$. Even when the circuit breaker CB is opened to isolate the phase, induced current still flows into the phase $\underline{a}$ by way of the admittance between the other lines particularly admittance $Y_{cab}$ and $Y_{cca}$. Before the secondary arc can be extinguished, it becomes necessary for the arc to be reduced to as small a current as possible.

Figure 4 shows a similar arrangement where each phase has two juxtaposed conductors and where there is fault between one of the conductors and earth. While a fault occurs on one of the conductors of one phase, and that conductor is isolated by opening a circuit breaker, the current is still fed from each of the other five conductors due to the interconductor admittance.

It can be seen from Figure 3 that, between the phase $\underline{a}$ and each of the other phases, there is an interphase capacitance with an interphase reactance in parallel with it. The present invention is based on the idea that, if each interphase capacitance can be caused to resonate with the corresponding interphase reactance, then the impedance between the phases becomes infinite and the current flow therebetween zero. The invention, therefore, seeks to change the

6

interphase reactance to a value where the reactance and the interphase capacitance resonate. In this way it becomes possible to make the secondary arc current, and the recovery voltage in the transmission line, zero by choosing the reactance of the reactor in such a way that the capacitance between the lines and the reactor between the lines resonate in parallel.

Referring to Figure 5, a bus-bar is connected by a three phase power line to another bus-bar (not shown) and one phase of the three phase power line is indicated by reference A. At the connection station between the bus-bar and the line there is a circuit breaker CB and a protective relay LINE PRO, as well known, generates a trip signal, shown by a dotted line, to be transmitted to the circuit breaker in response to outputs from a current transformer CT and a potential transformer PD, when an earth fault occurs on the phase $\underline{a}$.

One terminal of the primary windings of transformer TR is connected to the respective phase of the transmission line and the other terminal of each of the primary windings is starred. A reactor Lg is connected between the neutral point of the star connected primary windings and earth. The secondary winding of each phase of the transformer TR is connected to a series connection of a phase reactor RE and a pair of thyristors THY connected in anti-parallel arrangement. A filter F is also provided.

A control device CONTROL receives outputs from the current transformer CT, the potential transformer PD, the protective relay LINE PRO, and also from an auxiliary contact of the circuit breaker CB. The control device generates a signal to change the angle of the thyristor THY to a predetermined value when a fault occurs, as described in more detail with respect to Figures 7 and 8.

When a fault is detected, the reactance of the transformer TR of each phase is controlled by the thyristor THY so that the reactance is changed to a predetermined value. As a result, it is possible to extinguish the secondary arc by arranging for the interphase capacitance and the controlled reactance between lines to resonate in parallel.

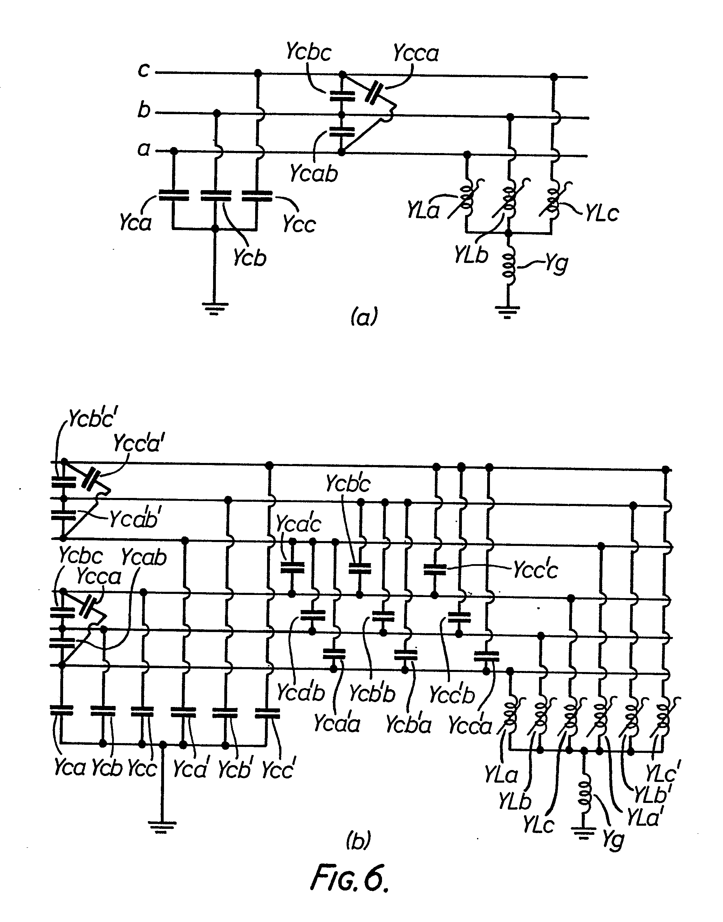

As shown in Figure 6(a), the thyristor phase control reactor with zero phase compensation is constituted in such a way that the interphase capacitance of the line is compensated for by adjusting the reactance between the lines.

As shown in Figure 6(b), the reactance between conductors of a two conductor per phase transmission line can also be compensated for.

Figure 7 is an example of the control means CONTROL referred to above in which the phase to which the secondary arc is applied is identified by PHASE

8

SELECTION of the operative condition of the circuit breaker CB, or the operative condition of the protective relay LINE PRO, or by way of an over current relay OC, or an under voltage relay UV, or the like, and the gate ignition angle of the thyristor THY is determined at the GATE CONTROL so as to transmit an ignition signal to the thyristor THY. Now, if a gate ignition angle is set in advance, which is in correspondence with the most suitable reactance value of each phase which is capable of compensating for the interphase capacitance or the capacitance between the lines by the condition of the troubled phase, it becomes possible to instantaneously respond in determining the ignition angle of the thyristor gate at the GATE CONTROL portion.

Thus, the secondary arc extinction device in an electric power system is constituted in such a way that a thyristor phase control reactor with zero phase compensation is provided at a service entrance of a line in an electric place, a trouble phase is identified by a trip signal condition of a protective relay LINE PRO for a line or by the operative condition of a relay OC, UV for selecting a trouble phase or by the operative condition (b contact) of the circuit breaker CB and a reactance value of each phase is controlled to be a predetermined value so as to match the parallel resonance condition above-described.

9

Therefore, it becomes possible to reduce the period of time for extinction of the secondary arc in the power transmission system and, furthermore, reclosing is made possible. Although it is impossible to gather together the reactors for reactive power control of the system at the service entrance of the line in the case of the fixed reactor, it becomes possible to do so in accordance with the device of this invention because the reactance value is made variable. In addition, it is possible to constitute as a combination of a thyristor phase control reactor and a circuit breaker switching control capacitor, in other words, to constitute in combination with the capacitor equipment. Therefore, it is possible to provide the reactive power control means in such a way as to be gathered together at the service entrance of the line, which will also become possible to be used at the time when any trouble is caused for the line so as to shorten the period of time for extinction of the secondary arc. In addition, since it is possible to use the floating capacitance of the line as the advance capacitance by controlling the reactor current, it becomes possible for the electric station as a whole to save the capacitor, which is quite advantageous from the economical viewpoint.

Another embodiment of a secondary arc extinction device in accordance with the present invention will be explained with reference to Figure 8 wherein the output of the earth protective relay EARTH LINE PRO and the output of OR gate are supplied to an AND gate AND.

The AND gate is employed to prohibit the operation of thyristor THY if an interphase short-circuit occurs. In other words, even if the output of current transformer CT indicates that an interphase short-circuit has occurred, earth protective relay EARTH LINE PRO does not function.

The present invention is not limited to the above-mentioned embodiments but may be varied and carried out in various manners without varying the gist of the invention.

In accordance with the present invention as mentioned above, since a thyristor phase control reactor with zero phase compensation is provided at a service entrance of a transmission line, a fault is identified by a trip signal condition of a relay for protecting a line, or by the operative condition of a relay for selecting a trouble phase, or by the operative condition of a circuit breaker, and a reactance value of the reactor of each phase is controlled to be a predetermined value which is most suitable, it becomes possible to provide a means for extinction of secondary arc in an electric power system which is very reliable and in accordance with which it

11

is possible to make short the period of time for extinction of secondary arc for all kinds of troubles.

Claims: ——

1. An electric power system including a multiphase transmission line, means for detecting the presence of a secondary arc between one phase of the line and earth, a transformer having a primary winding and a secondary winding for each phase, one terminal of each primary winding being connected to the respective phase of the line, first reactance means connected between the other terminal of each primary winding and earth, second reactance means connected to each secondary winding of the transformer and means for controlling the second reactance means to thereby extinguish said secondary arc in response to the detecting means indicating the presence of such an arc.

2. An electric power system as claimed in claim 1, wherein said second reactance means includes a semiconducting switching element and a reactor connected in series therewith.

3. An electric power system as claimed in claim 2, wherein said semiconducting switching element includes thyristors connected in anti-parallel relation with each other.

4. An electric power system as claimed in any

13

preceding claim, further comprising filter means connected to said secondary winding of said transformer.

5. An electric power system as claimed in claim 3, further comprising a current transformer, a potential transformer, a protective relay connected to the current and potential transformers, a circuit breaker having an auxiliary contact for responding to said protective relay, or OR gate connected to said current transformer, said potential transformer, said protective relay, and said auxiliary contact of the circuit breaker, and means for setting the firing angle of the thyristor of said second reactance means to a predetermined value in response to an output from said OR gate.

6. An electric power system as claimed in claim 3, further comprising a current transformer, a potential transformer, an earth protective relay connected to said current and potential transformers, a circuit breaker having an auxiliary contact for responding to said earth protective relay, an OR gate connected to said current transformer, said potential transformer, and said auxiliary contact of the circuit breaker, an AND gate connected to said OR gate and said earth protective relay, and means for setting the

14

firing angle of the thyristor of said second reactance means to a predetermined value in response to an output from said AND gate.

0067532

1/3

FIG. 1.
PRIOR ART

FIG. 2.
PRIOR ART
(a)          (b)

FIG. 3.
PRIOR ART

FIG. 4.
PRIOR ART

Fig. 5.

Fig. 7.

Fig. 8.

FIG.6.

European Patent Office

**EUROPEAN SEARCH REPORT**

| Category | Citation of document with indication, where appropriate, of relevant passages | Relevant to claim | CLASSIFICATION OF THE APPLICATION (Int. Cl. ³) |
|---|---|---|---|
| X | "Soviet Inventions Illustrated" Week C30, 3 September 1980 Section X13 | 1-3 | H 02 H 9/08 |
| Y | & SU - A - 702 447 | 5,6 | |
| | "Soviet Inventions Illustrated" Week C15, 21 May 1980 Sections R51, R53 | | |
| Y | & SU - A - 672 700 | 5,6 | **TECHNICAL FIELDS SEARCHED (Int.Cl. ³)** |
| | | | H 02 H 1/02 H 02 H 9/02 H 02 H 9/08 |

## DOCUMENTS CONSIDERED TO BE RELEVANT

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

The present search report has been drawn up for all claims

| Place of search | Date of completion of the search | Examiner |
|---|---|---|
| Berlin | 04-08-1982 | LEMMERICH |

EPO Form 1503.1   06.78